# EUROPÄISCHE PATENTSCHRIFT

(11) **EP 0 607 523 B1**
(45) Veröffentlichungstag und Bekanntmachung des Hinweises auf die Patenterteilung: **28.05.1997**
(21) Anmeldenummer: 93118538.3
(22) Anmeldetag: 18.11.1993
(51) Int. Cl.: F02B 37/12

(54) **Vorrichtung zur Steuerung der Verdichtungsleistung eines Abgasturboladers**
Device for controlling the compression output power of an exhaust driven turbocharger
Dispositif de commande de puissance de compression d'un turbocompresseur entrainé par les gaz d'échappement

(30) Priorität: 22.12.1992 DE 4243448
(43) Veröffentlichungstag der Anmeldung: 27.07.1994
(73) Patentinhaber: ROBERT BOSCH GMBH, 70442 Stuttgart (DE)
(72) Erfinder: Rembold, Helmut, Dipl.-Ing., D-70435 Stuttgart (DE); Stengel, Bernhard, Dipl.-Phys., D-73061 Ebersbach (DE); Unland, Stefan, Dipl.-Ing., D-71701 Schwieberdingen (DE); Torno, Oskar, D-71701 Schwieberdingen (DE); Häming, Werner, Dipl.-Ing., D-74861 Neudenau-Herbolzheim (DE); Rothhaar, Ulrich, Dipl.-Ing. (FH), D-70469 Stuttgart (DE); Surjadi, Iwan, Dipl.-Ing., D-71665 Vaihingen/Enz (DE); Sloboda, Robert, Dipl.Ing., D-71706 Markgroeningen (DE); Bäuerle, Michael, Dipl.-Ing. (FH), D-74354 Besigheim-Ottmarsheim (DE)

(56) Entgegenhaltungen:
- GB-A- 2 256 459
- PATENT ABSTRACTS OF JAPAN vol. 8, no. 40 (M-278) (1477) 21. Februar 1984 & JP-A-58 195 023 (NIPPON JIDOSHA BUHIN SOGO KENKYUSHO K.K.) 14. November 1983
- PATENT ABSTRACTS OF JAPAN vol. 8, no. 20 (M-271) (1457) 27. Januar 1984 & JP-A-58 180 725 (TOYO KOGYO K.K.) 22. Oktober 1983

## Beschreibung

### Stand der Technik

Die Erfindung betrifft eine Vorrichtung zur Steuerung der Verdichtungsleistung eines Abgasturboladers. Bei einer durch die DE-C2 36 24 248 bekannten Vorrichtung wird zur Steuerung der Verdichtungsleistung des Abgasturboladers durch den Stellantrieb ein Turbinenleitapparat der Abgasturbine verstellt. Der den Stellantrieb steuernde Druck wird durch eine Vakuumpumpe erzeugt, wobei der Unterdruck, der auf die Stelleinrichtung durchgreift, durch ein aufwendiges Doppelsitzventil verbunden mit einer Doppelmembraneinrichtung gesteuert wird. Dieser steuernden Ventileinrichtung wird einerseits der Unterdruck der Vakuumpumpe zugeführt, andererseits auch der Ladedruck des Luftverdichters des Abgasturboladers sowie ein lastabhängig modifizierter Unterdruck, der zusätzlich noch wahlweise zu einem nicht modifizierten Unterdruck durch eine elektrische Steuereinrichtung einer Steuerkammer der Ventileinrichtung zugeführt wird, um einen Leistungsverlust der Brennkraftmaschine bei positivem Lastwechsel aus dem Leerlauf heraus zu vermeiden. Bei der Steuerung der Turbinenleistung eines Abgasturboladers gemäß dem Stand der Technik mittels eines verstellbaren Leitapparates ergibt sich die Problematik, daß die gesamte Abgasmenge durch die Turbine des Abgasturboladers geleitet wird, wobei die Leistung des Abgasturboladers lediglich durch die Art der Anströmung modifiziert wird. Bei Erhöhung der Abgabeleistung der Brennkraftmaschine wird dabei der Turbinenleitapparat in Richtung Schließstellung geführt, um somit die Anströmgeschwindigkeiten der Abgase auf die Turbinenschaufel zu erhöhen. Dabei wird ein minimaler Querschnitt für die Abgase zur Beaufschlagung der Turbinenschaufel freigegeben. Mit steigendem Ladedruck wird dann der Turbinenleitapparat so gesteuert, daß der Durchtrittsquerschnitt in Richtung Öffnungsstellung bewegt wird, so daß der mit zunehmender Last ansteigende Abgasmassenstrom zu keiner Erhöhung des Staudruckes vor der Turbine führt, was den Nachteil hätte, daß eine innere Abgasrückführung erfolgt mit Minderung der Brennkraftmaschinenleistung und vor allen Dingen mit Erhöhung des Kraftstoffverbrauchs. Eine solche Erhöhung des Abgasgegendruckes bzw. des Kraftstoffverbrauches stellt sich auch dann ein, wenn auf der Luftzufuhrseite der Brennkraftmaschine die vom Verdichter abgegebene Druckluft an der Drosselklappe gedrosselt wird. Die Ausschiebearbeit der Brennkraftmaschine steigt auch aus diesem Grund. Mit deren Erhöhung steigen Druck und Temperatur im Zylinder, welches zu einer Verschlechterung des Wirkungsgrades der Brennkraftmaschine führt. Ein solcher Einfluß ist auch durch die Vorrichtung gemäß dem Stand der Technik nicht vermeidbar, da der gesamte Abgasstrom durch die Turbine gefördert werden muß. Die bekannte Einrichtung ist sehr aufwendig und weist nur eine beschränkte Eingriffsmöglichkeit auf durch analoge, mechanische Erfassung von Steuerparametern die über mechanische Stellglieder übertragen und gewertet werden müssen.

Durch die JP 58-19 50 23 ist weiterhin eine mit einem Abgasturbolader betriebene Brennkraftmaschine bekannt, bei der eine gesteuerte Druckluftpumpe zur Erzeugung eines Stelldrucks vorgesehen ist, der bei Teillast ein normalerweise schließendes Bypassventil in einer Abgasbypassleitung ganz öffnet. Dabei wirkt der Luftdruck gegen die Kraft der Feder in Öffnungsrichtung des Bypassventils. Bei hoher Drehzahl und hoher Last wird dieses Ventil ebenfalls geöffnet. In diesem Falle wird dem pneumatischen Stellantrieb der Verdichterdruck des Abgasturboladers zugeleitet.

### Vorteile der Erfindung

Die erfindungsgemäße Vorrichtung mit den kennzeichnenden Merkmalen des Patentanspruchs 1 hat demgegenüber den Vorteil, daß in Abhängigkeit von Betriebsparametern eine Stellgröße erzeugt wird, die unabhängig vom Ladedruck die Verdichterleistung bereits im Teillastbereich der Brennkraftmaschine steuert, in dem sonst bei Verwendung des Ladedrucks zur Bildung eines Steuerdrucks noch keine ausreichende Druckhöhe zur Verstellung von pneumatischen Stellantrieben zur Verfügung steht, wodurch in diesem Lastbereich der Kraftstoffverbrauch verringert werden kann. Dabei werden optimale Leistungsabgabeeigenschaften der Brennkraftmaschine erzielt auch bei Lastaufnahme aus dem Niedriglastbereich. Durch die Steuerung der Verdichterleistung bereits im Teillastbereich werden die Drosselverluste, die bei zu hoher, ungesteuerter Verdichterleistung an der Drosselklappe auf der Saugseite der Brennkraftmaschine auftreten, vermieden. Der Abgasgegendruck wird gesenkt und die Ladelufttemperatur reduziert, was insgesamt zu einer wesentlichen Erhöhung des Wirkungsgrades der Brennkraftmaschine mit Verbrauchs senkung führt. Dabei bleibt das Leistungsverhalten bei Vollastbetrieb entsprechend der Verdichterauslegung erhalten. Dabei ist besonders vorteilhaft daß das den Abgasturbolader steuernde Ventil im Bypass zur Abgasturbine so ausgeführt, daß es bei fehlendem Stelldruck den Abgasbypass geöffnet hält und so eine Sicherheitseinrichtung darstellt, wenn die Stelldruckmittelversorgung ausfallen sollte, so daß mit Ausfall der Steuerung des Abgasturboladers dann dieser mit minimaler Ladedruckerzeugung betrieben wird. Insbesondere wird mit dieser Ausgestaltung der Stellkräftebedarf im Teillastbereich gegenüber bekannten Ausgestaltungen reduziert. Gemäß Patentanspruch 5 wird vorteilhaft die Stelldruckmittelpumpe durch den vom Verdichter des Abgasturboladers erzeugten Druck unterstützt, was die Leistungsbereitstellung zur schnellen Druckmittelerzeugung reduziert aber trotzdem noch die Unabhängigkeit der Stelldruckmittelerzeugung garantiert. Durch die Unteransprüche 6 und 7 schließlich ergibt sich eine Reduzierung des Stellmittelbedarfs durch das erfindungsgemäß zwischen Stellantrieb und Luftpumpe eingebaute pneumatisch gesteuerte Schaltventil.

### Zeichnung

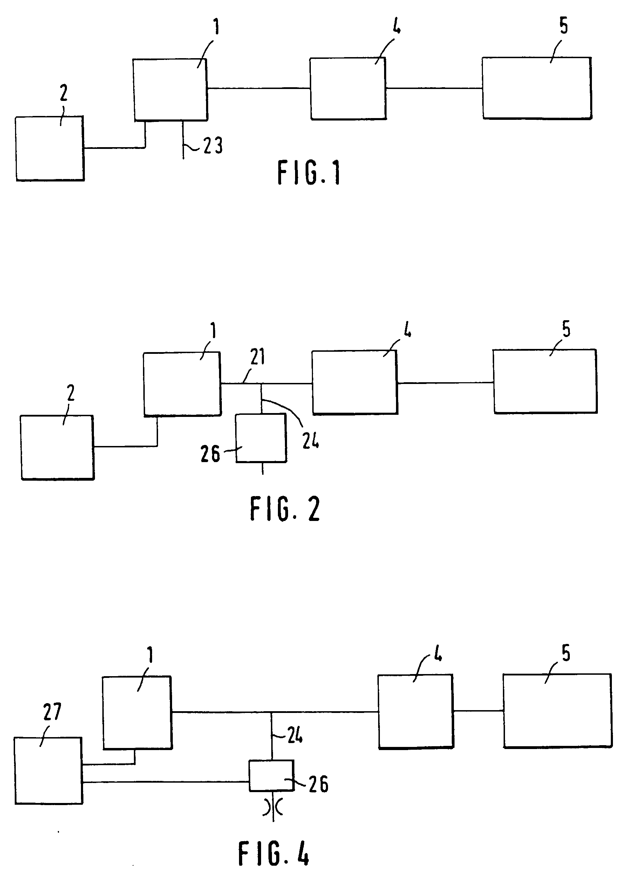

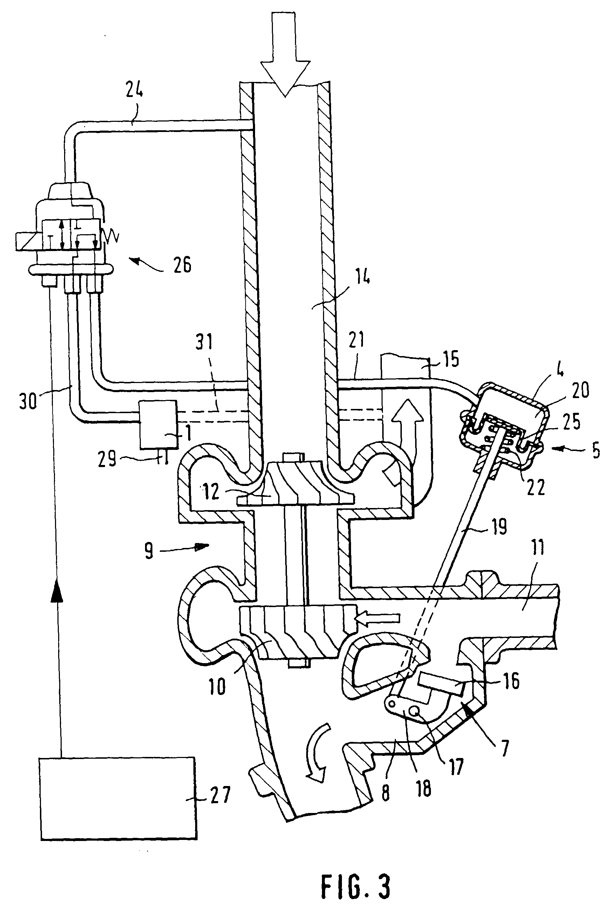

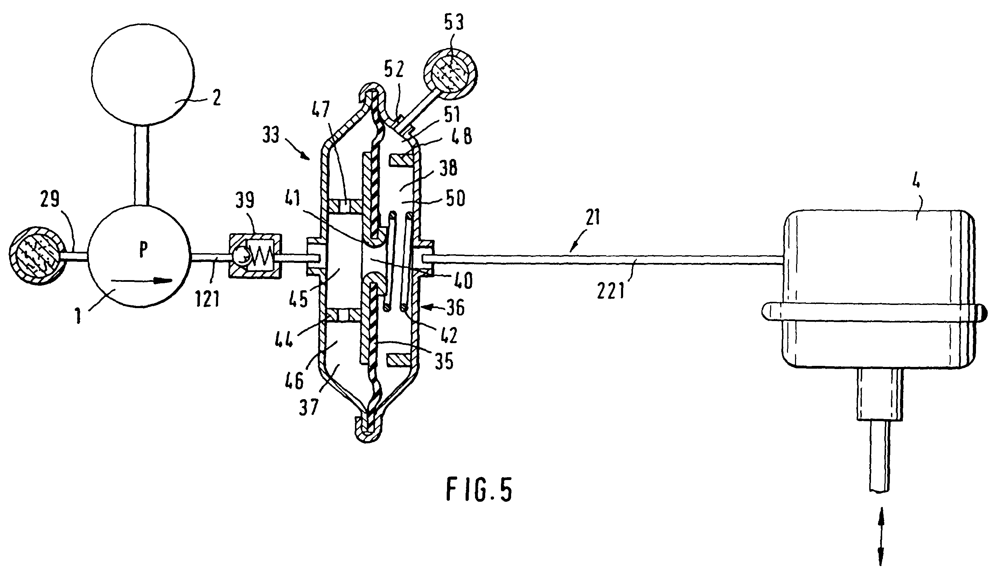

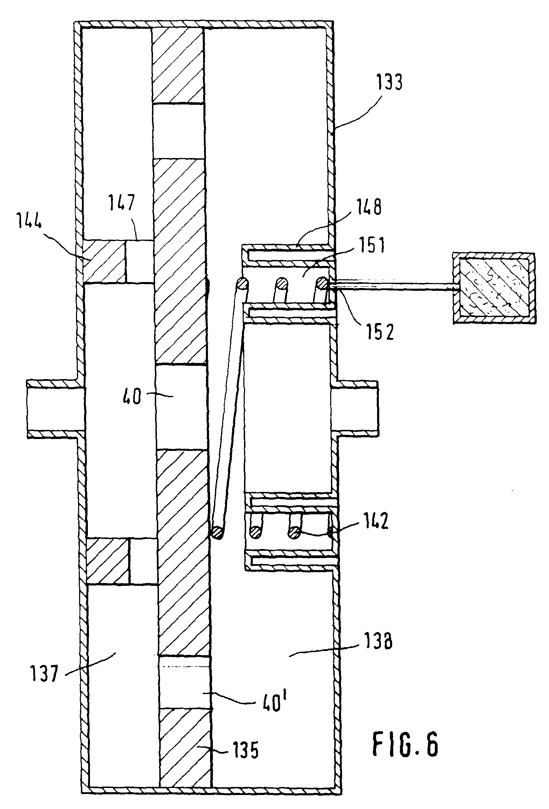

Sechs Ausführungsbeispiele der Erfindung sind in der Zeichnung dargestellt und werden in der nachfolgenden Beschreibung näher erläutert. Es zeigen Figur 1 eine schematische Darstellung einer Basisausgestaltung der Erfindung, Figur 2 ein zweites Ausführungsbeispiel in abgewandelter Form, Figur 3 ein drittes Ausführungsbeispiel mit einer ergänzenden Ausgestaltung für ein viertes Ausführungsbeispiel, Figur 4 die schematische Darstellung zum Ausführungsbeispiel nach Figur 3, Figur 5 ein fünftes Ausführungsbeispiel mit einem zwischengeschalteten pneumatisch gesteuerten Schaltventil und Figur 6 eine Ausführungsvariante zum Ausführungsbeispiel nach Figur 5.

### Beschreibung

Figur 1 ist zu entnehmen, daß eine Luftpumpe 1 von einem Steuergerät 2 in Abhängigkeit von Betriebsparametern einer Brennkraftmaschine, die mit einem Turbolader betrieben wird gesteuert wird. Die Luftpumpe erzeugt als Stelldruckmittel für eine Druckdose 4 Druckluft mit einer über Umgebungsdruck liegender Druckhöhe entsprechend der Ansteuerung des Steuergeräts 2. Entsprechend diesem gesteuerten Steuerdruckes verstellt die Druckdose 4 als pneumatischer Stellantrieb eine Stelleinrichtung 5, die vorzugsweise ein Ventil in einer Bypassleitung der Abgasleitung einer Brennkraftmaschine ist, wobei die Bypassleitung die Turbine eines zur Brennkraftmaschine gehörenden Abgasturboladers umgeht oder eine Stelleinrichtung für eine variable Turbinengeometrie der Abgasturboladerturbine ansteuert. Anhand von Figur 3 ist die Anordnung dieses Ventils 7 in der Bypassleitung 8 dargestellt. Die Figur 3 zeigt dabei schematisch den Abgasturbolader 9 mit der Turbine 10 in der Abgasleitung 11 der Brennkraftmaschine. Die Turbine 10 ist mit dem Verdichter 12 des Abgasturboladers gekoppelt, der über eine Luftansaugleitung 14 Luft ansaugt, verdichtet und über eine zur Brennkraftmaschine führenden Saugleitung 15 den Brennräumen der nicht weiter dargestellten Brennkraftmaschine zuführt. Das Ventil 7 in der Bypassleitung 8 weist ein Klappenventilglied 16 auf, das auf einer Achse 17 schwenkbar gelagert ist und über einen Hebelarm 18, an dem eine Stellstange 19 der Stelleinrichtung 5 angreift, betätigt wird. Die Stelleinrichtung weist die Druckdose 4 auf, in der eine Membran 25 einen Arbeitsraum 20 einschließt, der über eine Steuerdruckleitung 21 mit der Luftpumpe 1 an deren Druckausgang verbunden ist. Die Membran ist dabei mit der Stellstange 19 verbunden und wird durch eine Feder 22 beaufschlagt, die die Stellstange 19 so verstellt, daß das Klappenventilglied 16 in Offenstellung bewegt wird. Somit wird bei fehlendem Überdruck im Arbeitsraum 20 das Ventil 7 aufgesteuert.

Beim Ausführungsbeispiel nach Figur 1 wird die Luftpumpe 1 so angesteuert, daß der gewünschte Steuerdruck sich in dem Arbeitsraum 20 der Druckdose 4 zur Verstellung des Ventils in seine jeweiligen Offenstellungen einstellt. Für den Fall, daß der einmal erreichte Steuerdruck im Arbeitsraum 20 wieder reduziert werden soll wird dieser durch die zum Stillstand gebrachte Luftpumpe 1 selbst entlüftet, wozu diese einen Entlüftungsanschluß 23 aufweist. Dies kann entweder eine mit einer Drossel versehene Verbindungsleitung zwischen Druckseite und Gangseite bzw. Umgebungsluft der Luftpumpe sein oder es ist eine in der Bauart der Luftpumpe, wie bei Flügelzellenpumpen liegende gedrosselte Verbindung an den Druckfördergliedern vorbei. Eine Abwandlung in diesem Sinne zeigt die schematische Darstellung gemäß Figur 2. Hier geht von der Steuerdruckleitung 21, der Verbindung zwischen Luftpumpe 1 und Druckdose 4, eine Zweigleitung 24 zur Umgebungsluft ab, in deren Leitung eine konstante Drossel 25 eingesetzt ist. Bei diesem Ausführungsbeispiel erfolgt der Druckabbau im Arbeitsraum 20 der Druckdose 4 über die Drossel 25 speziell bei Minderung oder Abschalten der Förderleistung der Luftpumpe 1. Die Förderleistung der Luftpumpe 1 ist dabei so ausgelegt, daß trotz des Bypasstromes von Förderluft über die Drossel 25 der ausreichende Stelldruck für die Druckdose erreicht wird und das Ventil je nach Bedarf schnell geschlossen werden kann. In der Figur 3 ist nun eine Weiterbildung zu der Ausgestaltung nach Figur 2 im einzelnen dargestellt und in Figur 4 ist diese Ausgestaltung in schematischer Darstellung wiedergegeben. Bei Figur 3 ist die Zweigleitung 24 als Verbindungsöffnung zur Umgebungsluft vorgesehen. Die Zweigleitung 24 mündet dabei in die Luftansaugleitung 14 ein. Weiterhin ist in der Zweigleitung zusätzlich ein elektrisch gesteuertes Ventil 26 eingesetzt, im ausgeführten Beispiel als Magnetschaltventil, das von der Steuereinrichtung 27 angesteuert wird, die auch die Luftpumpe 1 steuert. Das elektrisch gesteuerte Ventil ist ein 3/2-Ventil und verbindet in seiner ersten Stellung die sich an das Ventil anschließende Zweigleitung 24 mit der Steuerdruckleitung 21. In seiner anderen Stellung unterbricht das Ventil die Verbindung zur Zweigleitung 24 und verbindet den Druckausgang 30 der Luftpumpe mit der Steuerdruckleitung 21. Das Ventil wird dabei vorzugsweise getaktet angesteuert, so daß je nach Tastverhältnis sich ein bestimmter Steuerdruck im Arbeitsraum 20 der Druckdose einstellt. Dabei kann die Luftpumpe mit konstanter Antriebsleistung betrieben werden oder auch zusätzlich mit variabler Antriebsleistung betrieben werden. Das elektropneumatische Ventil und die Luftpumpe können natürlich auch in eine Komponente zusammengefaßt werden. In der schematischen Darstellung nach Figur 4 ist das Taktventil direkt in die Zweigleitung 24 eingesetzt und steuert die Verbindung zwischen Steuerdruckleitung 21 und Umgebungsluft, wobei die Steuerdruckleitung 21 ständig mit dem Druckausgang der Luftpumpe verbunden ist.

In alternativer Ausgestaltung kann nun der Luftansaugstutzen 29 der Luftpumpe 1 zur Umgebungsluft durch eine Hilfsleitung 31, die mit der Saugleitung 15 verbunden ist, ersetzt werden, so daß die Luftpumpe nun bereits vorverdichtete Luft ansaugt und somit der Leistungsbedarf zur Druckerzeugung der Luftpumpe reduziert ist. Das hat den Vorteil, daß bei Bedarf eines höheren Stelldrucks zur Erhöhung der Verdichterleitung durch Schließen des Klappenventils 16 ein Teil der Druckerhöhung bereits durch den Verdichter 12 bereitgestellt wird. Trotzdem wird der Steuerdruck, der im Arbeitsraum 20 der Druckdose wirksam ist unabhängig von der Verdichterleistung des Verdichters 12 des Abgasturboladers gebildet. Durch die Ansteuerung des elektrisch gesteuerten und betätigten Ventiles 26 kann ein Druckeinfluß von der Druckseite des Verdichters voll kompensiert werden. Durch die vorstehend beschriebenen Ausführungsbeispiele kann der Steuerdruck entweder durch Steuern der Antriebsleistung, auch über intermittierenden Betrieb gemäß Figur 1 eingestellt werden. Bei Stillstand der Pumpe oder Leistungsrücknahme kann der Druck im Arbeitsraum so über die beschriebene innere Entlastung in der Pumpe, z.B. bei einer Flügelzellenpumpe, oder über eine Entlastungsleitung mit vorzugsweise Entlastungsdrossel reduziert werden.

Wird ein Magnetventil 26 gemäß Figuren 3 oder 4 vorgesehen, dann kann die Luftpumpe entweder bei Steuerbedarf, z.B. bei Betriebsaufnahme der Brennkraftmaschine durch das Steuergerät oder einen Schalter anderer Art eingeschaltet werden und die Steuerdruckmodifikation durch die Ansteuerung des Magnetventils durch das Steuergerät vorgenommen werden, oder es können sowohl die Antriebsleistung der Luftpumpe als auch das Taktventil gesteuert werden.

Dabei können zur Drucksteuerung auch andere elektrisch betätigte Ventile eingesetzt werden, wie sie bei Drucksteuerung sonst schon Anwendung finden, wie z.B. statt einem 3/2-Ventil zwei 2/2-Ventile. Es kann durch ein 2/2-Ventil, wie in Figur 4 beschrieben auch die Verbindung zwischen Luftpumpe und Arbeitsraum 20 gesteuert werden, wobei zwischen Arbeitsraum und Ventil zum Druckausgleich eine bei Schließzeiten des Ventils wirksame Drosselverbindung zur Umgebung vorgesehen ist. Um Druckmittel zu sparen ist letztlich auch ein völliges Verschließen des Arbeitsraumes 20 dann durch z.B. ein 3/3-Ventil einzusteuern, wenn momentan oder längere Zeit keine Druckänderung im Arbeitsraum erforderlich ist.

In Ergänzung zu den vorstehenden Ausführungsbeispielen insbesondere denen gemäß Figuren 1 und 2, bei denen die Rückstellung des Ventils 7 durch Abschalten der Pumpe oder durch Öffnen der Zweigleitung 24 mit Hilfe des elektrisch gesteuerten Ventils 26 erfolgte, wird gemäß Figur 5 eine Möglichkeit geboten den elektrischen Steuerungsaufwand zu reduzieren und insbesondere die Antriebsleistung bzw. den Energieaufwand bei den Ausführungsbeispielen nach Figur 2 klein zu halten. Zu diesem Zweck ist in Abwandlung z.B. zur Ausführung nach Figur 2 in die Steuerleitung 21 ein pneumatisch gesteuertes Schaltventil 33 eingesetzt. Die Figur 5 zeigt wie auch das Ausführungsbeispiel nach Figur 2, die Druckluftpumpe 1, die von einem Elektromotor 2 gesteuert angetrieben wird, über einen Luftansaugstutzen 29 Luft ansaugt und diese unter Druck über die Steuerleitung 21 der Druckdose 4 des Stellantriebs 5 zuführt. Das in dieser Steuerleitung 21 eingesetzte Schaltventil 33 ist in der Art einer Druckdose aufgebaut mit einem festen Gehäuse 36, dessen Innenraum durch eine Membran 35 in einem ersten luftpumpenseitigen Druckraum 37 und einem zweiten druckdosenseitigen Druckraum 38 aufgeteilt wird. In den ersten Druckraum 37 mündet der von der Luftpumpe abführende Steuerleitungsteil 121, der ein in Richtung Schaltventil 33 öffnendes Rückschlagventil 39 enthält und vom zweiten Druckraum 38 führt der Steuerleitungsteil 221 ab zur Druckdose 4. Die Membran 35 hat ein beide Druckräume 37 und 38 ständig miteinander verbindende mittlere Drosselöffnung 40 die an einem Stützteller 41 ausgebildet ist. Der mit der Membran 35 fest verbundene Stützteller liegt auf Seite der Luftpumpe 1 und kommt dort unter Einwirkung einer sich andererseits an der Membran 35 abstützenden Druckfeder 42 in Anlage an einen ringförmigen Stützanschlag 44. Bei Anlage des Stütztellers 41 am Stützanschlag 44 teilt dieser den ersten Druckraum in einen Innenraum 45 und einen äußeren Ringraum 46, die über Querbohrungen 47 im Stützanschlag miteinander ständig verbunden sind. Die sich am Gehäuse des Schaltventils abstützende Druckfeder liegt innerhalb eines Ringsteges 48, an den die Membran 35 bei Druckbeaufschlagung des Raumes 37 dichtend zur Anlage kommt. Dadurch wird der zweite Druckraum in einen inneren Raum 50 und einen äußeren Ringraum 51 unterteilt, der über eine Öffnung 52, ggf. unter Zwischenschaltung eines Filters 53 ständig mit der Umgebungsluft verbunden ist.

Befindet sich die Druckluftpumpe im fördernden Zustand, so fördert sie über das Rückschlagventil 39 Luft in den ersten Druckraum 37. Über die Drosselöffnung 40 fließt diese weiter in den zweiten Druckraum 38 und von dort über die Steuerleitung 221 zur Druckdose 4. Aufgrund des Druckabfalls an der Drosselöffnung 44 wird nun aber die Membran 35 entgegen der Feder 42 ausgelenkt und kommt zur Anlage an den Ringsteg 48. Damit ist eine Verbindung zur Umgebungsluft verschlossen und somit auch ein Druckluftverlust vermieden, so daß die gesamte Fördermenge der Druckluftpumpe der Druckdose 4 zugeführt werden kann. Zugleich ist die durch Steuerdruckmittel in Richtung Luftpumpe beaufschlagte Fläche der Membran reduziert, so daß die Membran in der Anlage am Ringsteg 48 bleibt. Soll der Arbeitsraum der Druckdose entlastet werden, so wird die Antriebsdrehzahl der Druckluftpumpe reduziert oder die Luftpumpe abgeschaltet, so daß ein Druckabfall an der Drosselöffnung 40 entfällt. Die Kraft der Feder zusammen mit dem innerhalb des Ringstegs wirkenden Druck ist dann größer als der im ersten Druckraum 37 auf die Membran wirkende Druck, so daß in der Folge die Membran 35 vom Ringsteg abhebt und der Arbeitsraum der Druckdose über die Leitung 221, den inneren Raum 50, den äußeren Ringraum 51 und die Öffnung 52 entlastet werden kann. Solange jedoch der Druck in den Druckräumen 37 und 38 gleich groß ist und sich die Membran 35 zuvor in Anlage an den Ringsteg 48 bewegt hat, reicht die Kraft der Druckfeder 42 nicht aus, um die Membran vom Ringsteg 48 abzuheben und die Entlastung des Arbeitsraums 20 der Druckdose 1 zu leiten. In diesen Bereichen wird grundsätzlich ein Druckmittelverlust vermieden, so daß die Antriebsleistung der Druckluftpumpe wesentlich reduziert werden kann.

Die Figur 6 zeigt eine Ausführungsvariante zum Ausführungsbeispiel nach Figur 5 des Schaltventils 33. Das in Figur 6 gezeigte Schaltventil 133 weist nunmehr keine Membran sondern nur noch einen zwischen einem festen Stützanschlag 144 und einem Doppelringsteg 148 bewegbare Platte. Diese Platte trennt wiederum das Schaltventil 133 in einen ersten Druckraum 137 und einen zweiten Druckraum 138, die über den drosselnden Querschnitt 40 und die Ausgleichsbohrungen 40' an der Platte miteinander verbunden sind. Die Ausgleichsbohrungen 40' sind deutlich kleiner im Querschnitt als der Drosselquerschnitt 40. Der im vorigen Ausführungsbeispiel vorgesehene äußere Ringraum 51, der bei dichter Auflage der Membran 35 auf dem Ringsteg 48 von dem inneren Raum 50 getrennt war und mit der Umgebungsluft verbunden ist wird nun durch den Zwischenraum 151 zwischen den Stegen des Doppelringsteges 148 gebildet und ist dort wiederum über eine Öffnung 152 mit der Umgebungsluft verbunden. Die zwischen den Doppelringstegen liegende Fläche bewirkt, daß die Scheibe 135 bei Druckbeaufschlagung des ersten Druckraums 137 gegen die Kraft einer Druckfeder 142 in Anlage an den Doppelringsteg 148 bleibt. Wird die Druckluftzufuhr zum ersten Druckraum 137 unterbrochen, und fällt der Druckabfall an der Überströmdrosselung vom ersten Druckraum 137 zum zweiten Druckraum 138 weg, so überwiegt die Kraft der Rückstellfeder 142 gegenüber der einseitig in Schließrichtung wirkenden resultierenden Kraft aufgrund der Druckbeaufschlagung der Scheibe 135 und es wird die Scheibe vom Doppelringsteg 148 abgehoben, so daß der Arbeitsraum 20 der Druckdose 4 wiederum über die Steuerleitung 221, den zweiten Druckraum 138 und die Öffnung 152 entlastet werden kann.

Alternativ zur Ausgestaltung nach Figur 5 kann das Schaltventil auch so ausgeführt werden, daß eine Rückstellfeder 42 entfällt, wenn die Membran 53 selbst federnd ausgebildet ist mit Vorzugsrichtung zum Ringsteg 48.

## Patentansprüche

1. Vorrichtung zur Steuerung der Verdichterleistung eines an einer Brennkraftmaschine angeordneten Abgasturboladers über einen pneumatischen Stellantrieb (5, 4, 7), der mit einem Stelldruckmittel durch eine separate als Druckluftpumpe ausgebildete Luftpumpe (1) versorgt wird, wobei der Stelldruck in Abhängigkeit von wenigstens einem Betriebsparameter gesteuert wird, wobei als Stelldruckmittelpumpe eine elektrisch angetriebene Luftpumpe (1) vorgesehen ist und in dem Bereich zwischen der Druckseite der Luftpumpe und dem Stellantrieb (4) eine Verbindung zur Umgebungsluft vorgesehen ist, deren Durchgang durch ein von dem Steuergerät in Abhängigkeit von Betriebsparametern der Brennkraftmaschine elektrisch betätigtes Ventil (26) gesteuert wird und daß der Stellantrieb (6) einen Arbeitsraum (20) aufweist, der von einer beweglichen Wand, die gegen die Kraft einer Feder 822) verstellbar ist, begrenzt wird und mit der ein Ventilglied (16) eines Ventils in einer von der Abgasleitung (11) stromaufwärts der Turbine (9) des Abgasturboladers abführenden Leitung (8) gekoppelt ist, wobei die Feder das Ventilglied in Öffnungsrichtung beaufschlagt.

2. Vorrichtung nach Anspruch 1, dadurch gekennzeichnet, daß das elektrisch betätigte Ventil ein 3/2-Wegeventil ist, durch das der Stellantrieb entweder mit der Luftpumpe (1) oder mit der Umgebungsluft verbunden wird.

3. Vorrichtung nach Anspruch 2, dadurch gekennzeichnet, daß das gesteuerte Ventil (26) ein Schaltventil ist, das getaktet betätigt wird.

4. Vorrichtung nach einem der vorstehenden Ansprüche, dadurch gekennzeichnet, daß die Luftpumpe eine Druckluftpumpe ist.

5. Vorrichtung nach Anspruch 4, dadurch gekennzeichnet, daß die Druckluftpumpe auf ihrer Ansaugseite mit dem Ausgang des Verdichters (12) des Abgasturboladers verbunden ist.

6. Vorrichtung nach Anspruch 1, dadurch gekennzeichnet, daß zwischen der Druckseite der Luftpumpe (1) und dem Stellantrieb (4) ein pneumatisch gesteuertes Schaltventil (33) angeordnet ist, das ein Ventilglied (35) aufweist, das mit einem Verbindungsdrosselquerschnitt (40) versehen ist, durch den der Eingang des Schaltventils mit dem Ausgang des Schaltventils ständig verbunden ist und das Ventilglied durch eine Rückstellfeder (42, 142) von einem ringförmigen, den stellantriebsseitigen Austritt aus dem Schaltventil (33, 133) umfassenden Ventilsitz (48, 148) weg zu einem Stützanschlag (44, 144) hin beaufschlagt ist und ein vom ringförmigen Ventilsitz (48, 148) und dem Ventilglied (35, 135) begrenzbarer Raum (51, 151) mit der Umgebungsluft verbunden ist.

7. Vorrichtung nach Anspruch 6, dadurch gekennzeichnet, daß das Ventilglied eine Scheibe (135) ist und der Ventilsitz ein einen mit der Umgebungsluft verbundenen Ringraum (151) begrenzender Doppelringsitz (148) ist.

## Claims

1. Appliance for controlling the compressor power of an exhaust gas turbocharger arranged on an internal combustion engine by means of a pneumatic actuator (5, 4, 7), which is supplied with an actuating pressure fluid by a separate air pump (1) designed as a compressed air pump, the actuating pressure being controlled as a function of at least one operating parameter, an electrically driven air pump (1) being provided as the actuating pressure fluid pump and a connection to the ambient air being provided in the region between the pressure side of the air pump and the actuator (4), the passage of which connection is controlled by a valve (26), which is electrically actuated by the control unit as a function of operating parameters of the internal combustion engine, and the actuator (4) having a working space (20) which is bounded by a movable wall, which can be adjusted against the force of a spring (22) and by means of which a valve element (16) of a valve is connected in a conduit (8) leading away from the exhaust gas conduit (11) upstream of the turbine (10) of the exhaust gas turbocharger, the spring acting on the valve element in the opening direction.

2. Appliance according to Claim 1, characterized in that the electrically actuated valve is a 3/2-way valve by means of which the actuator is connected either to the air pump (1) or to the ambient air.

3. Appliance according to Claim 2, characterized in that the controlled valve (26) is a switching valve which is actuated in pulses.

4. Appliance according to one of the preceding claims, characterized in that the air pump is a compressed air pump.

5. Appliance according to Claim 4, characterized in that the suction side of the compressed air pump is connected to the outlet of the compressor (12) of the exhaust gas turbocharger.

6. Appliance according to Claim 1, characterized in that a pneumatically controlled switching valve (33) is arranged between the pressure side of the air pump (1) and the actuator (4), which switching valve (33) has a valve element (35) which is provided with a connecting throttle cross-section (40) by means of which the inlet of the switching valve is continuously connected to the outlet of the switching valve, and the valve element is acted upon by a return spring (42, 142) in the direction away from an annular valve seat (48, 148) which encloses the outlet on the actuator side from the switching valve (33, 133), and towards a support stop (44, 144), and a space (51, 151), which can be bounded by the annular valve seat (48, 148) and the valve element (35, 135), is connected to the ambient air.

7. Appliance according to Claim 6, characterized in that the valve element is a disc (135) and the valve seat is a double-annular seat (148) bounding an annular space (151) connected to the ambient air.

## Revendications

1. Dispositif de commande de la puissance d'un compresseur d'un turbocompresseur à gaz d'échappement équipant un moteur à combustion interne par l'intermédiaire d'un actionneur pneumatique (5, 4, 7) alimenté en fluide sous pression de réglage par une pompe à air (1) réalisée séparément comme pompe à air comprimé, la pression de réglage étant commandée en relation avec au moins un paramètre de fonctionnement, la pompe à fluide comprimé de réglage étant une pompe à air (1) électrique et dans la zone comprise entre le côté de pression de la pompe à air et l'entraînement de réglage (4), il est prévu une communication avec l'air extérieur dont le passage est commandé par une soupape (26) actionnée électriquement par l'appareil de commande en relation avec les paramètres de fonctionnement du moteur à combustion interne et l'actionneur (6) comporte une chambre de travail (20) délimitée par une cloison mobile déplaçable contre la force d'un ressort (22) et à laquelle est couplé un organe d'obturation (16) d'une soupape dans une conduite (8) dérivant de la conduite à gaz d'échappement (11) en amont de la turbine (9) du turbocompresseur à gaz d'échappement, le ressort sollicitant l'organe d'obturation dans le sens de son ouverture.

2. Dispositif selon la revendication 1,
caractérisé en ce que
la soupape à commande électrique est un distributeur à 3/2 voies relié par l'actionneur soit à la pompe à air (1) soit à l'air ambiant.

3. Dispositif selon la revendication 2,
caractérisé en ce que
la soupape commandée (26) est une soupape de commutation actionnée de manière cadencée.

4. Dispositif selon l'une quelconque des revendications précédentes,
caractérisé en ce que
la pompe à air est une pompe à air comprimé.

5. Dispositif selon la revendication 4,
caractérisé en ce que
la pompe à air comprimé est reliée sur son côté extérieur à la sortie du compresseur (12) du turbocompresseur à gaz d'échappement.

6. Dispositif selon la revendication 1,
caractérisé en ce qu'
entre le côté de pression de la pompe à air (1) et l'actionneur (4) il est prévu une soupape de commutation (33) à commande pneumatique ayant un organe d'obturation (35) muni d'une section d'étranglement (40) de liaison reliant en permanence l'entrée et la sortie de la soupape de commutation, l'organe d'obturation étant sollicité par un ressort de rappel (42, 142) pour s'écarter d'un siège de soupape (48, 148) annulaire, entourant la sortie du côté de l'actionneur de la soupape de commutation (33, 133) pour être poussé contre une butée d'appui (44, 144) ainsi qu'un volume (51, 151) relié à l'air ambiant et qui est délimité par un siège de soupape annulaire (48, 148) et par l'organe d'obturation (35, 135).

7. Dispositif selon la revendication 6,
caractérisé en ce que
l'organe d'obturation est une rondelle (135) et le siège de soupape est un siège à double nervure annulaire (148) délimitant un volume annulaire (151) communiquant avec l'air extérieur.
